Europäisches Patentamt

(19) European Patent Office

Office européen des brevets

(11) Publication number: **0 245 714**
**A2**

## (12) EUROPEAN PATENT APPLICATION

(21) Application number: **87106277.4**

(22) Date of filing: **30.04.87**

(51) Int. Cl.³: **G 01 S 5/02**

(30) Priority: **09.05.86 US 861369**
**01.07.86 US 880705**

(43) Date of publication of application:
**19.11.87 Bulletin 87/47**

(84) Designated Contracting States:
**BE CH DE ES FR GB GR IT LI NL SE**

(71) Applicant: **Halavais, Richard Arthur**
**3815 North 28th Street**
**Phoenix Arizona 85016(US)**

(72) Inventor: **Halavais, Richard Arthur**
**3815 North 28th Street**
**Phoenix Arizona 85016(US)**

(74) Representative: **Wagner, Karl H. et al,**
**WAGNER & GEYER Patentanwälte**
**Gewuerzmuehlstrasse 5 Postfach 246**
**D-8000 München 22(DE)**

(54) A single-point locating system.

(57) A locating system employs a single-point device employing unique scanning patterns for generating peak signal data which can be used to calculate the position of a signal source (12,14) within a scanned region. One preferred embodiment utilizes a satellite (10) in high earth geosynchronous orbit and a simultaneous yaw and roll pattern to scan a substantial portion of the earth's surface. The point source being located may be virtually any form of transmitter of radiant energy such as infrared, electromagnetic, light or acoustical energy. The scanning device may also be positioned in a low earth orbit satellite, an aircraft, a missile or a helicopter. The single-point device re-radiates the signal source transmission to a computer command center (16) which correlates single-point device scanning position data with received transmissions to accurately compute the location of the signal source (12, 14). Beacons (24) placed at precisely known locations may be used to interpret scan data. The computer triangulates peak signals of multiple roll orbits (74) generated during each yaw orbit (75) of the single-point device to determine the precise location of the source (76). The computer may also search a data base to identify the signal source and provide related information previously stored in the data base.

The invention is particularly advantageous for locating stolen vehicles and for finding kidnapped persons.

An alternative embodiment employs a peak-detecting ground-based receiver and a satellite or other single-point scanning device which generates and transmits a signal to the receiver indicating the satellite's precise current position in antenna yaw and roll. The ground-based receiver is equipped with a computer for calculating its own position by repeatedly correlating the time of peak signal detection and the yaw and roll data from the received satellite signal. Such an alternative embodiment would enable precise self-position determination without the use of a command center.

The term "peak signal detection" also includes averaging first and last signal acquisition, counting and averaging all signal acquisitions and all other techniques for determining the direction of maximum received signal strength.

1

# A SINGLE-POINT LOCATING SYSTEM

## TECHNICAL FIELD

The present invention relates generally to radiation-based locating systems and more specifically, to a single-point locating system which in one preferred embodiment utilizes a satellite in geosynchronous orbit scanning a preselected region on the earth's surface in a simultaneous yaw and roll pattern for precisely locating a point source of energy. Such device can be used to find lost or stolen items or to provide position information for navigation systems. It can also be used to provide location information to trucking and shipping companies, taxicab companies, airlines, bus and train companies, construction companies, surveyors and the like. It can also be used to determine the exact present position of any person or thing on which a suitable transmitter is located. Thus, the present invention can help in finding lost or kidnapped children. It can be used as means for instant communication of auto accidents or road emergencies as well as portable security devices for travelers, hikers, joggers and the like. A passive receiver-calculator version can be used to determine precise local position based upon peak detection of satellite down-link scanned transmissions. As used herein the "peak signal detection" includes other signal direction detection means.

## BACKGROUND ART

## CORRESPONDING APPLICATION

This application is a continuation-in-part of U.S. Application Serial No. 861,369 filed May 9, 1986.

## PRIOR ART

The need for a reliable means for quickly and accurately locating the position of an object or person has long been recognized. In emergency situations such as shipwrecks, aircraft crashes or automobile accidents, the ability to quickly and accurately determine location is often a life and death matter. When a child is lost or has been kidnapped, fast and accurate location of his whereabouts is equally a life and death situation. Furthermore, for the elderly or infirm, the means of instantly communicating their exact present location in the event of a medical or other emergency returns to them the freedom to travel and independence. To the dispatcher of a taxicab company, instant knowledge of the exact location of

4

each cab in the fleet allows him the time and cost savings of directing the nearest taxicab in his fleet to respond to a call from a customer. Of course, such time and cost savings can be realized in analogous service industries such as high speed delivery services and the like. A reliable and accurate locating system when used on aircraft offers aircraft collision avoidance as well as superior navigational information allowing straight line flight to any destination thereby saving both time and fuel. Upon approach to an airport, aircraft can utilize the added accuracy of such a navigational capability to provide instrument landing systems at any airport rather than the limited number of airports now offering such capability. The same advantages can be used on ships for allowing lower cost and great flexiblity in scheduling due to the time savings of straight line navigation over long distances. In military applications, the exact position of troops and vehicles can prove vital to the battlefield commander. The ebb and flow of the battle can be instantly seen in real time presentations of troop and armament locations. For diplomats in hazardous areas, a precise and portable location system offers a means of security in the event terrorist activity results in taking hostages. The chance for successful rescue is greatly improved by knowing the exact present location of the hostage. Such locating devices may also be advantageously used in security systems such as car alarms.

Prior art attempts to provide fast, accurate location information suffer major limitations including high cost, complexity, inaccuracy, large size and weight and limited operating range. Relevant prior art includes the following:

        3,063,048  Lehan et al

        3,242,494  Gicca

        3,440,635  Hull

        3,702,477  Brown

        3,703,714  Andrews

        3,786,413  Matthews

        3,789,409  Easton

        3,795,896  Issacs

        3,852,750  Klein

        3,852,763  Kreutel Jr. et al

        3,893,069  Mason

        3,906,204  Rigdon et al

        3,941,984  Chappell et al

        4,012,728  Fowler

4,114,155  Raab

4,161,730  Anderson

4,177,466  Reagan

4,188,614  Habib Jr.

4,260,982  DeBenedictis et al

4,276,553  Schaefer

4,359,733  O'Neill

4,383,242  Sassover et al

4,445,118  Taylor et al

4,523,178  Fulhorst

Patent No. 3,063,048 to Lehan et al is directed to a
discovery and location system which utilizes a single
satellite for determining the position of a vehicle.
The transmitter provides for a continuous wave signal
to the satellite.  However, the satellite is not
stationary and as it approaches and recedes, the
frequency of the signal received by the satellite
changes due to the Doppler effect.  When the satellite
is closest to the object, the frequency of the received
signal decreases at a maximum rate.  Within the
satellite, a phase-lock loop locks a variable frequency
oscillator to the incoming signal.  The output of the
variable frequency oscillator is then beat against the output of a crystal oscillator to produce an audio beat signal whose frequency varies in a similar manner when taken with respect to the incoming signal.

Patent No. 3,440,635 to Hull is directed to a police alarm-type system which provides for a transmitter to be carried on a person. In this reference the inventor uses a portable alarm transmitter carried by the person in order to signal a central location such as a police station by employing direction finders at two of the stations in a simultaneous manner. The capability of determining the origin of the alarm signal from the transmitter is provided and the person sending the signal may be located.

Patent No. 3,703,714 to Andrews is directed to a remote alarm system that transmits an alarm signal to a displaced receiver when there is an unauthorized access made into a vehicle. This system includes a portable remote transceiver which transmits and receives signals. There is a vehicle mounted radio transceiver which is both operatively tuned to receive and to transmit to the remote transceiver. The remote transceiver further includes a means whereby a signal may be sent from the transceiver back to the vehicle transceiver to actuate some alarm system on the vehicle if so desired.

Patent No. 3,852,750 to Klein is directed to a navigation satellite system. However it uses a plurality of synchronous satellite relays in order to determine the position of various earth bound vehicles. Three synchronous satellites are used alternatively to relay radio frequency carrier amplitude modulated signals with a multiplicity of low frequency tones. Each of the vehicles has a communication receiver including an amplitude modulated detector and a position location system. The amplitude modulated detected output of the communications receiver is coupled to the position location systems and determines the position of the vehicle from the relative phases of the low frequency tones.

Patent No. 3,893,069 to Mason discloses a vehicle alarm system for alerting an owner of an unauthorized entry to his vehicle. The system includes a transmitter/receiver which may be in the form of a walkie-talkie unit. The owner of the vehicle may be in the range of the transmitter and is warned when anyone tampers with the vehicle through activation of a plurality of compartments which is what activates the transmitter when any of each of those switches is closed. Thus, this patent discloses the general concept of alerting a vehicle owner or user at a remote location that his vehicle is being tampered with.

Patent No. 3,906,204 to Rigdon et al discloses a satellite positioning system to determine the position of any type of vehicle on the earth's surface by processing signals sent from the satellite. However, this is not a stationary satellite and the positioning is based on the Doppler shift in frequencies of the signals sent to the satellite in combination with the orbit description data encoded in the signals.

Patent No. 4,177,466 to Reagan discloses an auto theft detection system where there is provided a transmitter adapted to broadcast a call signal through an antenna. An encoder is coupled to the transmitter and modulates the call signal to specify which one of many automobiles the call is directed to. The vehicle may then broadcast a locator signal when queried from a central station. Indicators are provided and are responsive to the location signal to determine the location of the possibly missing vehicle.

10

Patent No. 4,276,553 to Schaefer is directed to a system for determining the position of the radiant energy source from a geostationary, synchronous satellite. The system and method are provided by scanning the beam of a narrow beamwidth antenna in first and second normal directions over a predetermined region which includes the source. The high level of energy transduced by the antenna in each of the scanning directions is detected and correlated with the scanning position of the beam by feeding the output of a detector to a recorder. Despite the fact that the satellite is stationary, it must utilize a plurality of earth stations to hone in on the target.

Patent No. 4,445,118 to Taylor et al is directed to a navigation system which utilizes a geostationary satellite in combination with a global positioning system comprising a plurality of satellites. The position coordinates of various vehicles and other sources on the earth's surface is provided by processing a plurality of signals transmitted by the multiplicity of orbiting satellites in the global positioning system. An acquisition aiding signal generated by a control station is relayed to the various user terminals through the geostationary satellite.

11

None of the aforementioned prior art or any other prior art known to the applicant, discloses a locating system utilizing a single-point satellite or other such platform cooperating with a single ground station for accurately determining the precise location of a signal source. Furthermore, none of such prior art or any other prior art known to the applicant discloses a locating system utilizing a single platform such as a high earth geosynchronous satellite which scans through a combined yaw and roll pattern to generate location information for accurately determining the precise location of a source of radiant energy. Furthermore, no prior art known to the applicant utilizes a single-point satellite-based transmitter having a precisely known antenna scanning pattern to provide local position assessment capability by means of a passive receiver-calculator.

12

## SUMMARY OF THE INVENTION

The locating system of the present invention, in one particular embodiment thereof, includes a radio transmitter located on or attached to the object to be located. Such transmitter broadcasts over a selected frequency on command of either some detection device and/or an initiation signal from a command center on one or more frequencies. The system further comprises a satellite in a geosynchronous high earth orbit to which a scanning motion in roll and yaw has been imparted. By such motion the scanning describes a search pattern of the entire visible face of the earth. The satellite comprises a narrow bandwidth antenna receiving the signal from the earth station radio transmitter only at those combinations of yaw and roll wherein lines of triangulation pass through the target and a radio receiver tuned to receive the frequency or frequencies transmitted by the radio transmitter located on or attached to the object to be located.

The satellite further comprises a radio transmitter wherein the signal received from the earth station transmitter is relayed to a command center where by triangulation, the exact location of the object to be located is determined. In other embodiments the satellite of the present invention comprises a narrow bandwidth monitor or detecting device such as an infrared detector or the like wherein detection occurs only at those combinations of yaw and roll wherein lines of triangulation pass through the target. Such a satellite further comprises a radio transmitter relaying a signal to a command center where through triangulation the exact location of the object or occurrence is determined. Although in a particular preferred embodiment herein disclosed, the scanning platform for relaying the signal source transmission to the command center is located on a satellite in geosynchronous high earth orbit, the elements of the present invention may be readily utilized on platforms located in alternative locations such as low earth orbit, airplanes, helicopters, hilltops and the like. Furthermore, although the preferred embodiment utilizes a satellite where scanning is accomplished by means of satellite motion in yaw and roll, it will be readily apparent to those having skill in the art to which the present invention pertains that such scanning may be achieved entirely by electronic means such as by means of a phased array antenna or by means of a mechanically movable antenna which is connected to an otherwise stationary platform.

14

The earth station transmitter portion of the present
invention may be provided in the form of a relatively
simple portable transmitter capable of transmitting
upon command at a selected frequency and relatively low
power, a preselected coded signal which conveys to the
satellite or other platform, information identifying
the source of the transmission. Furthermore, the
satellite or other platform portion of the present
invention may be also of relatively simple
implementation because the platform's function is
simple. More specifically, the function of the
platform is merely to relay the received signal
transmission either directly or indirectly to a single-
point ground station or alternatively, simply generate
a radio frequency transmission in response to the
detection of various forms of radiant energy. The
ground station of the present invention comprises a
suitable antenna capable of receiving the satellite-
generated signal, a receiver for processing the signal
and a computer for utilizing the data carried by such a
signal.

15

Although the present invention may be utilized in a
virtually unlimited number of applications, one
particularly advantageous application of the present
invention is its use in mobile security systems such as
car alarms. It is well-known that a major limitation
in car alarms is the lack of a guaranteed response to
the triggering of the alarm. Typically, the response
if any depends upon someone noticing the sound of a
horn or the flashing of headlights and then taking the
time to phone the police with a report. The present
invention provides both a signal through the satellite
and the exact location of the vehicle so that a
receiving command center can provide positive guarantee
of notification of the intrusion as well as the exact
location to proper authorities. In such an application
the transmitter portion of the present invention may be
located in the vehicle and provided with a digital
keyboard and other secure means for assuring that only
the authorized operator of the vehicle has gained
entrance and access to the vehicle. Otherwise the
system may be automatically initiated for generating a
suitable location and identifying transmission to the
platform such as a satellite of the present invention,
such transmission ultimately being received by the
ground station which can pinpoint the present location
of the vehicle and notify authorities not only that the

16

vehicle has been stolen but also where they may find the vehicle and recover same for the owner.

A second embodiment utilizes the same scanning pattern but passive receiver-calculators instead of uplink transmitters to permit individual local position determination without the aid of a ground-based command center. Each such receiver-calculator is designed to correlate peak-signal detection with yaw and roll data from the satellite transmitted signal and to calculate local position based upon multiple correlations. The method of position calculation for this second calculation is essentially identical to that employed in the command center of the first embodiment. As used herein, the term "peak signal detection" includes peak signal strength detection as well as averaging of first and last signal acquisition, counting and averaging all signal acquisition and any other means for identifying the direction of maximum signal strength.

## OBJECTS OF THE INVENTION

It is therefore a primary object of the present invention to provide a locating system of exceptional accuracy.

It is a further object of the present invention to provide a locating system which is relatively simple and inexpensive and which utilizes a radiant energy transmitter of sufficiently small size to be portable to the user.

It is still a further object of the present invention to provide a locating system which has worldwide range.

It is still a further object of the present invention to provide a locating system which operates in essentially real time.

It is still a further object of the present invention to provide a locating system capable of carrying a message to offer the user a means for communicating an emergency status either actively or passively to a command center where appropriate help can be dispatched or so that other messages to and between users may be sent and received.

18

It is still a further object of the present invention to provide an alarm system for mobile applications where an unauthorized intrusion of a vehicle or other object initiates guaranteed response to the exact location by the proper authorities.

It is still a further object of the present invention to provide a means for remotely monitoring various types of mechanical devices or chemical processes or the like and which assures proper intervention upon receipt of a signal identifying an anomalous condition.

It is still a further object of the present invention to provide a means for generating an intrusion alarm at locations remote from telephone communications or where factors make the use of a satellite-based system more desirable to the user.

It is still a further object of the present invention to provide a local position calculating capability in a ground-based receiver utilizing satellite roll and yaw data on a signal received from a scanning satellite-based transmitter.

## BRIEF DESCRIPTION OF THE DRAWINGS

The aforementioned objects and advantages of the present invention as well as additional objects and advantages thereof will be more fully understood hereinafter as a result of a detailed description of a preferred embodiment when taken in conjunction with the following drawings in which:

FIG. 1 is a schematic illustration of the concept of the present invention utilizing a single-point satellite;

FIG. 2 is a schematic illustration of an alternative concept of the present invention utilizing a single-point satellite for locating and a second satellite for re-transmission to an earth station;

FIG. 3 is a block diagram of the present invention illustrating the major components thereof;

FIG. 4 illustrates the component paths of the yaw and roll search pattern employed by the platform of the present invention in an embodiment of a high earth geosynchronous orbiting satellite scanning the visible face of the earth for a signal from an earth-bound signal source;

FIG. 5 graphically illustrates the tracking mode of the present invention at 30 degree yaw angle intervals in terms of roll angle from the satellite's true north reference;

FIG. 6 is a representative trace of the peak signal strength roll and yaw angles on a selected frequency for the single target shown in FIG. 4;

FIG. 7 is a block diagram of the operating sequence of the present invention when using an earth beacon or series of earth beacons to provide reference data correlating satellite roll and yaw orbit positions; and

FIG. 8 is a block diagram of the operating sequence of the present invention utilizing an alternative method for assuring satellite roll and yaw orbit data accuracy based on on-board instrumentation obviating the requirement for earth bound beacons.

21

## DETAILED DESCRIPTION OF PREFERRED EMBODIMENTS

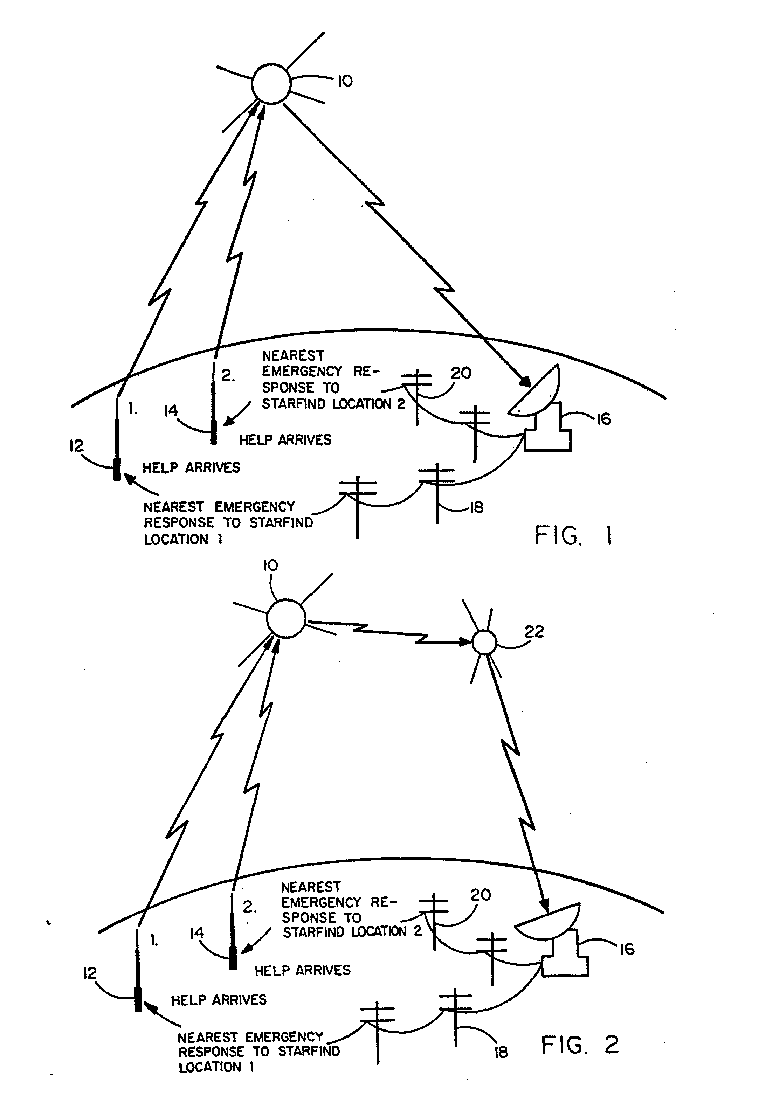

Referring first to FIG. 1, it will be seen that the satellite embodiment of the present invention may be configured to provide a means for alerting local authorities to respond to some form of emergency associated with a signal source transmission located by the platform of the present invention. In this configuration the invention comprises a satellite 10, a plurality of sending units 12 and 14, a ground station 16 and a plurality of land line communication links 18 and 20. The concept of the invention illustrated in FIG. 1 comprises a closed loop/guaranteed response to a signal from a user. For simplicity of illustration, only two signal source sending units are shown but obviously many more users may access the system simultaneously. The sending units, that is, the transmitters of the signal source to be located by the satellite 10 in conjunction with ground station 16, may of course serve numerous locating purposes. By way of example, one such sending unit may be used in a vehicle and provided with means for automatically transmitting an appropriate signal in the event the vehicle is accessed or moved from its location by unauthorized persons. Alternatively, the sending unit may be initiated or activated by a driver or passenger who may be in distress and require assistance. Another such sending unit may be utilized by a person in a wheelchair needing emergency medical assistance. Both sending units 12 and 14 transmit a radio signal which is received by the satellite 10 of the present invention which may, by way of example, be positioned in geosynchronous earth orbit. Satellite 10 relays the signal transmitted by either or both sending units 12 and 14 to the ground station 16. The ground station comprises a computer and a command center where the information contained in the signal is processed and an appropriate response is directed through land line communication links 18 and/or 20 to alert the nearest appropriate response center such as a hospital, the auto club or a police department.

The concept of the present invention illustrated in FIG. 2 is essentially identical to that illustrated in FIG. 1 with one exception, that exception is the inclusion of a commercial communications satellite 22 which is also in geosynchronous earth orbit. In the configuration illustrated in FIG. 2, satellite 10, instead of relaying the ground-based signal directly to a ground station 16, relays the signals to a commercial communications satellite 22 which then in turn relays the signal to the ground station 16.

Commercial communication satellite 22 does not form a part of the present invention and in fact, its inclusion in FIG. 2 is merely intended to illustrate that the locating system of the present invention may be readily configured to take advantage of available communication channels in nearby geosynchronous commercial satellite to optionally reduce the transmission of the satellite portion of the present invention. It is to be understood however that the operation of the present invention is not dependent upon access to such nearby commercial geosynchronous satellites and accordingly, the present invention should not be deemed to be limited in that regard.

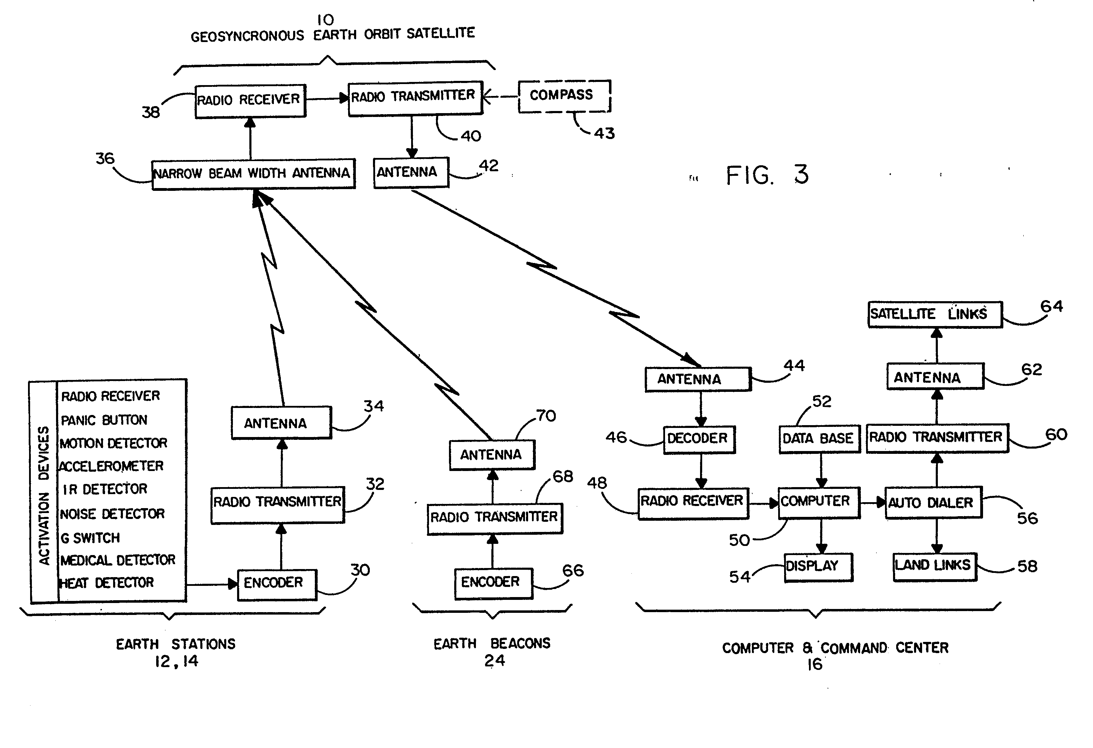

The major elements of the present invention are illustrated in block diagram form in FIG. 3. More specifically, as illustrated therein the sending unit or earth station 12 or 14 may be configured to respond to one or more alternative activation devices including by way of example, a radio receiver for remote initiation, a panic button for user initiation, a motion detector, accelerometer, infrared detector, noise detector or the like for determining unlawful intrusion into a vehicle, office, home or the like, a medical detector monitoring signs of patient distress indicating the need for immediate medical intervention, or a heat or smoke detector to monitor for fire and the like. Upon activation resulting from any of the aforementioned sources or others, an encoder 30 generates a unique pattern of data such as a serial binary bit pattern which identifies the sending unit by serial number and the type of emergency occurring or response desired so that an appropriate response can be made. The encoder 30 applies the encoded signal to a suitable radio transmitter 32 of selected frequency and power which is transmitted via antenna 34 to assure detection by the satellite 10 and location of the position of the sending unit in the manner hereinafter to be described.

As shown further in FIG. 3 the geosynchronous orbiting satellite 10 comprises a narrow beamwidth antenna 36, a radio receiver 38, a radio transmitter 40 and an antenna 42. An optional compass 43 can also be provided as will be discussed hereinafter. Narrow beamwidth antenna 36 is utilized as the means for scanning the earth's surface as hereinafter described. The narrow beamwidth antenna 36 preferably generates an elongated pencil beam antenna pattern having a narrow beamwidth in one dimension in order to ensure easy correlation of scan position with peak signal strength detection and an elongated pattern in a second dimension to ensure detection. An elongated linear array of high gain antennas for radio frequency detection or such a linear array of infrared detectors for infrared detection are deemed appropriate. The antenna 36 is connected to a radio receiver 38 for re-transmission of the received signal by means of radio transmitter 40 and antenna 42. Thus, the geosynchronous earth orbiting satellite 10 is a simple receiving/transmitting satellite utilizing a narrow beamwidth antenna for scanning the visible face of the earth during each roll and yaw for re-transmission of any radio transmissions received by the satellite receiving system. As will be hereinafter explained more fully, satellite 10 has a unique orbit pattern combining in one preferred embodiment a 12 revolution per minute roll rate with a one revolution per minute yaw rate so that the combined effect is a differential scan of the face of the earth at angles suitable for triangulation on point source radiation transmissions.

The satellite 10 is provided with a downlink antenna 42 which re-transmits or relays the sending unit information to a ground station or computer and command center 16. The downlink signal is received by an antenna 44 the output of which is applied to a decoder 46 and radio receiver 48. The decoder 46 and radio

26

receiver 48 process the encoded and relayed radio transmissions by decoding the signal originally encoded by the sending unit by means of encoder 30 and by analyzing the data imparted to the signal by the correlation of scan position, and peak signal reception at the satellite 10. A computer 50 keeps track of the roll and yaw rate of the satellite and by means of determining the point in the orbit where the sending unit peak signal is received, the computer determines the angle relative to true north or other reference in the orbit where the signal was received by the satellite.

In the preferred embodiment of the invention illustrated herein, during each yaw orbit 24 roll orbit signals are received from each point source of transmission and the computer triangulates on these to determine the location of the sending unit. Information encoded in the signal tells the computer the type of message that the sending unit is sending and dictates the appropriate response. Computer 50 searches a data base 52 to locate a street address or other identifying landmark nearest to the position of the sending unit as well as the location and phone number of the nearest emergency response center such as police station or hospital. The information found in the data base 52 may be displayed on a display 54.  The
computer is connected to an automatic dialer 56.
Dialer 56 is provided with the capability for
telephoning the emergency response center with a
computerized voice synthesized notification of the
emergency situation or alternatively a human operator
may be utilized to describe the response best suited to
handle the situation.  The auto dialer 56 may be
connected to a plurality of land links 58 or
alternatively, to a radio transmitter 60 and an antenna
62 which communicate with a plurality of satellite
links 64 to provide a direct satellite downlink to
relay the emergency information to a suitable emergency
response center.

The present invention contemplates two alternative
means for providing information indicative of the scan
position of the satellite 10.  One such means comprises
the use of earth beacons 24 illustrated in block
diagram form in FIG. 3.  Each such earth beacon
comprises an encoder 66, a radio transmitter 68 and a
suitable antenna 70.  The earth beacons are located at
known locations stored in the computer 50 at the ground
station 16.  Consequently, when the ground station 16
receives an encoded transmission indicative of an earth
beacon, it can readily utilize the known precise

28

location of the earth beacon to accurately determine the satellite scanning position at a precise time. As a result, the scanning pattern of the satellite 10 may be periodically determined or confirmed by means of such beacons. The encoder 66 of each such beacon generates an encoded signal identifying the particular beacon and thus indicating the precise location of such beacon. The encoded signal is transmitted to the satellite 10 by means of the radio transmitter 68 and antenna 70.

An alternative means for determining satellite scan position is a compass 43 shown in dotted box representation in FIG. 3 as a portion of the satellite 10. Compass 43 represents any one of a number of means for instantaneously determining the relative yaw and roll position of a satellite at any time such as by means of star location, star pattern identification, gyroscopes, infrared detection and other instrumentation.

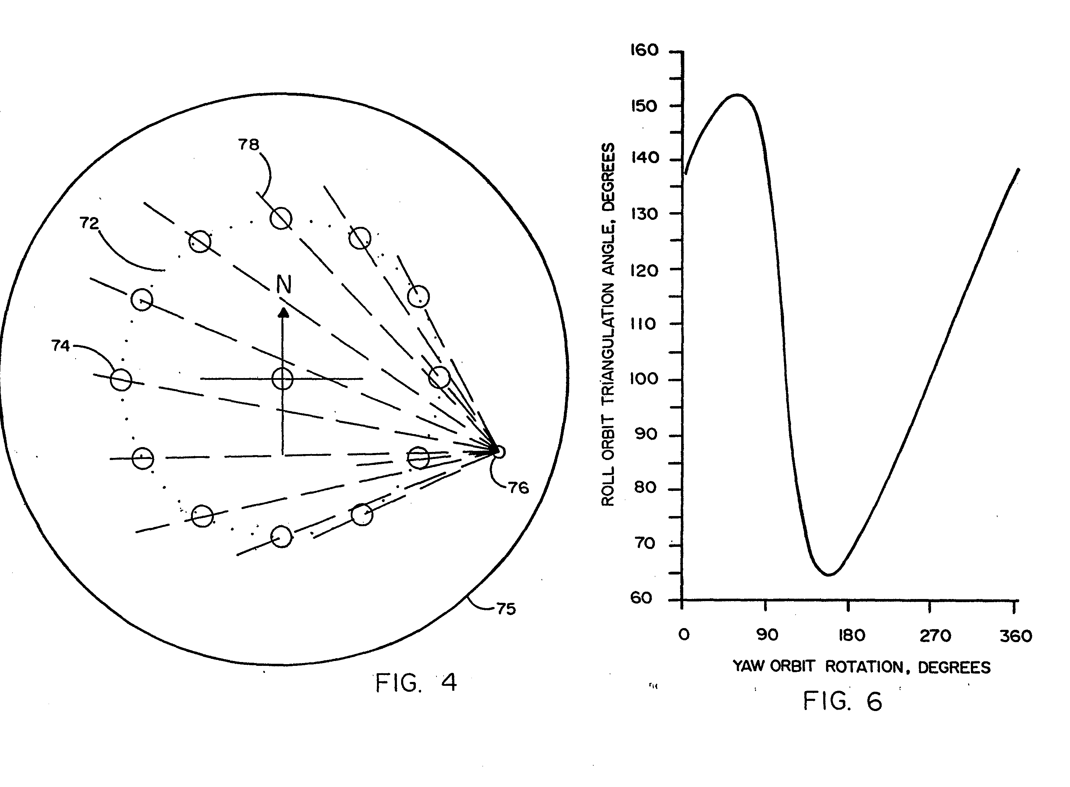

The manner in which the satellite or other platform portion of the present invention may be used to locate a source of radiant energy within a preselected geometrical area on or near the face of the earth may be best understood by reference to FIGs. 4, 5 and 6
which shall now be discussed. More specifically, FIG.
4 illustrates the respective components of the
composite scanning pattern employed by the present
invention for scanning the visible face of the earth
for a signal from a sending unit. For purposes of
clarity, FIG. 4 illustrates a single target located
outside the yaw orbit scan path. However, it will be
understood that the present invention is neither
limited to a single target nor to a single target
located outside the yaw path of the scan pattern and
that the invention detects the location of multiple
targets as well as targets located both inside and
outside the scan path projected onto the face of the
earth.

In a typical application of a preferred embodiment of
the invention wherein the satellite 10 is in a GEO
stationary, or geosynchronous orbit above the earth's
surface, the circle identified as 75 in FIG. 4 would
represent a projection of the earth's surface subtended
from the satellite location about 22,000 miles above.
On such a projected surface the continuous yaw rotation
of the satellite 10 or of the antenna portion thereof,
produces a first path 72 which may be considered
generically arcuate and specifically circular in the particular example illustrated in FIG. 4. It will be understood that the path 72 represents the intersection of an axis of a main beam of the narrow beamwidth antenna 36 of the satellite 10 with the earth's surface due to one component of the motion of the satellite or alternatively, the motion of the antenna.

The other component of the scanning pattern of the satellite 10 of the present invention is represented by a plurality of second arcuate or circular paths 74 of which in the particular example illustrated in FIG. 4 there are twelve spaced symmetrically along the first arcuate or circular path 72. Each such circle 74 represents the roll component of the pattern scanned along the axis of the main beam of the antenna 36 of the satellite 10. It will be understood that the combined effect of the paths 72 and 74 is a composite pattern in the form of an epicycloid or epitrochoid.

During each roll path 74 the occurrence of peak signal strength from a source is noted and that occurrence is correlated to the scanning line of the satellite narrow beamwidth antenna so that a single radius line of each such roll path 74 can be identified, that radius line effectively pointing toward the source of the radiation signal received by the satellite antenna. At least one such radius line is identified for each roll path 74 during the full excursion of the scanning pattern around the yaw path 72. In the particular example illustrated in FIG. 4 where there are twelve for each excursion of a yaw path 72 there will be twelve or twenty four such radii associated with each target such as single target 76 shown in FIG. 4 and the intersection of such radii will occur at the precise location of the target.

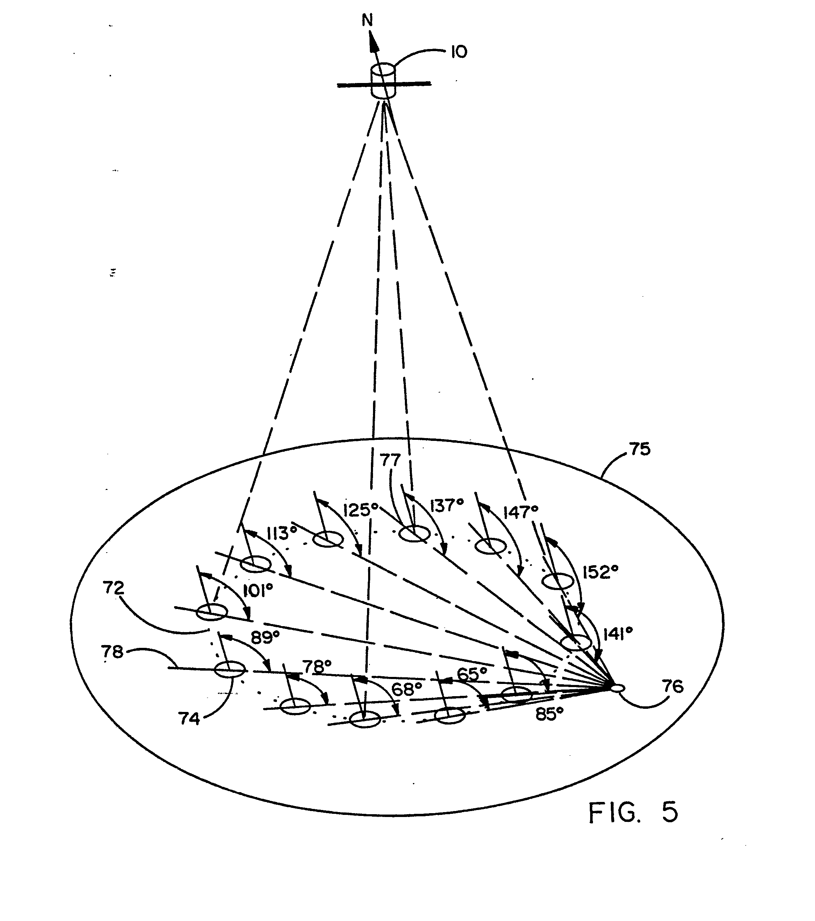

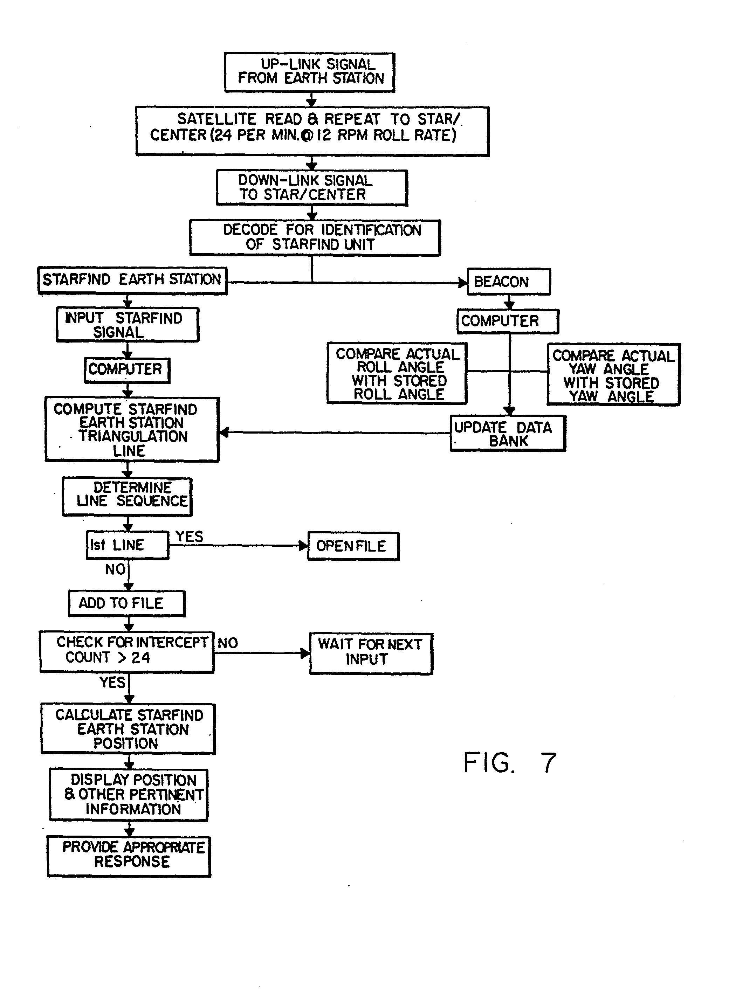

For purposes of explanation, it is convenient to identify each such radius or radial line by the angle between such radial line and the satellite's true north. Such angles for each of the radial lines of the particular example illustrated in FIG. 4 are shown in FIG. 5 wherein it is seen that the target acquisition roll angle for the particular target 76 illustrated in FIG. 5, varies from a minimum of approximately 65 degrees to a maximum of approximately 152 degrees assuming the target 76 remains stationary during the full minute it takes to complete the yaw orbit. The actual variation of roll orbit acquisition angle in degrees versus the position of the scan pattern in yaw orbit rotation in degrees is represented by the graph of FIG. 6. A zero degree yaw orbit orientation which corresponds to the roll orbit path 77, is oriented due

32

north of the center of the earth's surface 75.

The curve in FIG. 6 represents the locus of points on respective roll orbit paths along one yaw orbit path through which peak signal generated radial lines pass towards their common intersection point at the target 76. It will be understood that although the number of roll orbits in one yaw orbit may affect the accuracy of determining the target location, for a given target 76 of FIG. 5, all points generated on roll orbits irrespective of the number of such roll orbits would fall somewhere on the curve of FIG. 6 depending on the yaw angle. Furthermore, the radial lines passing through such points would all intersect at the target 76.

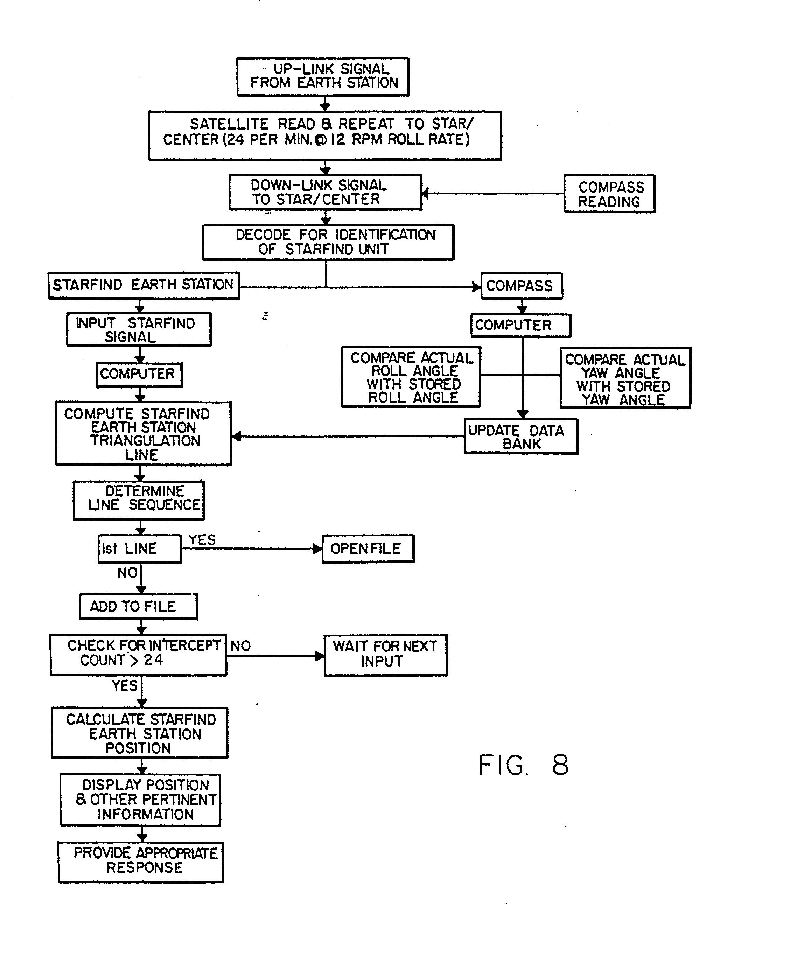

The process for providing location data used by the ground station of the present invention is illustrated in flow diagram form in FIGs. 7 and 8. FIGs. 7 and 8 illustrate virtually identical processes except for the use of a beacon in FIG. 7 to generate the yaw and roll angle data as compared to the use of a "compass" to generate that information in the process of FIG. 8. Accordingly, only one of such flow diagrams need be described herein. Referring to FIG. 7 therefore, it will be seen that in response to the uplink signal received from the satellite from a sending unit or earth station, the satellite reads and repeats the reading of the uplink signal twenty four times per minute assuming a twelve RPM roll rate. Each time the signal is read or re-read by the satellite it is transmitted or relayed down to the unitary earth station of the present invention where it is decoded for identification to determine what if any identifying information has been stored in the data base corresponding to the particular encoding of the sending unit, the signal of which has been received by the satellite.

The earth station functions include first inputting the relayed signal into the computer. The computer computes the sending unit's triangulation line by determining the satellite's roll and yaw angle at the occurrence of the peak signal detection for the particular roll path being processed. In the particular embodiment of the invention illustrated in FIG. 7, the roll and yaw information are at least updated by data derived from one or more earth beacons previously described in conjunction with FIG. 3. More specifically, if upon decoding of the earth station or sending unit code it is determined that the code corresponds to a beacon transmitter placed at a precisely known location within the region being
scanned, the beacon signal is applied to the computer
which compares the actual roll angle and yaw angle
computed from the location of the beacon with the
stored or assumed roll angle and yaw angle based upon
prior such calculations. If in fact there is a
difference between actual and stored roll and yaw
angles, the computer's data bank is updated to correct
for this discrepancy.

As previously indicated in the invention
configuration illustrated in FIG. 8, the processing
carried out by the computer is essentially the same,
however the source of the updating information is
derived from satellite-based instrumentation which has
been generically referred to herein as a compass. In
either case, the corrected roll and yaw angle
information is applied to the computation process
carried by the computer to determine the particular
triangulation line corresponding to a detected peak of
the sending unit signal for a particular roll orbit.
The computer then determines line sequence. More
specifically, it determines whether the calculated line
is the first line received or a subsequent line. If it
is the first line received then a file is opened and
the computer waits for the next input. If it is not the first line, the computer determines whether the line count is greater than some specified minimum such as 24 lines. If it is not then the computer waits for the next input. If the line count is greater than the specified minimum then the position of the signal source is calculated by computing the line intercept location. The position and other identifying information related to the signal source are then displayed and the appropriate response to the situation is made such as notification of local police or other authorities.

There may be occasions when it is preferably to obviate the use of a command center or to preclude the need for an uplink transmitter at each locating position. A second embodiment of the invention makes these alternatives possible. More specifically, by providing a satellite-based transmitter which generates a signal carrying precise, real-time yaw and roll scanning data, a ground-based passive receiver can be used to calculate its own position. This can be accomplished by correlation of peak signal detection and yaw and roll data or multiple roll scans in substantially the same manner utilized in the command center of the first embodiment. The second embodiment is particularly advantageous to boaters and the like who may need to determine their precise location for navigation purposes. Although the ground-based system of the second embodiment need not have a transmitter, it will be preferably equipped with a calculator substantially equivalent for example to a Hewlit Packard Model 41C programmable calculator, for arriving at the precise location based on multiple correlations of the receiver. The calculator would carry out the algorithm of FIG. 8 with the decode and compass update steps eliminated.

It will now be understood that what has been described herein is a novel and advantageous single-point locating system employing unique scanning patterns for generating peak signal data which can be used to calculate the position of a signal source within a scanned region. A particular, preferred embodiment of the invention has been described herein. The preferred embodiment utilizes a satellite in high earth geosynchronous orbit. The satellite provides an elongated narrow beamwidth antenna pattern the center line of which is made to scan simultaneously in a yaw and roll pattern either by yaw and roll mechanical motion of the satellite, mechanical motion of the antenna or combined electrical and mechanical motion inducement of the antenna pattern in order to scan a substantial portion of the earth's surface. Although it is contemplated that in preferred embodiments the signal source located by means of the present invention would be a form of radio frequency or microwave electromagnetic radiation, virtually any form of radiant energy such as infrared, electromagnetic, light or acoustical energy may also be utilized in other embodiments of the invention. Furthermore, the scanning device of the present invention, that is, the platform upon which the scanning pattern is generated, may also be positioned in a low earth satellite, an aircraft, missile, a helicopter or other device.

The single-point device re-radiates the signal source transmission or a manifestation thereof to a single ground-based computer/command center which correlates single-point device scanning position data with received transmissions to actually compute the location of the signal source based upon correlation of orbit data with peak signal detection data. Beacons may be placed at precisely known locations for periodically updating data corresponding to the yaw and roll angle of the satellite or other relay platform. The ground-based computer triangulates peak signals of multiple roll orbits generated during each yaw orbit of the single-point device to determine the precise location of the source. The computer may also search a data base to identify the signal source and provide related information previously stored in the data base.

The invention is particularly advantageous for locating stolen vehicles and for finding kidnapped persons where in each case such vehicle or person is carrying a sending unit or earth station which is activated in response to a preselected condition such as unauthorized access to the vehicle or volitional activation of the earth station by a person being kidnapped or otherwise endangered.

Those having skill in the art to which the present invention pertains will now understand that there are virtually unlimited applications for the present invention. By way of example, the present invention may be readily used for navigational purposes for controlling the position of military and commercial aircraft in response to real time knowledge of their actual flight paths. Furthermore, both embodiments of the present invention may have profound military applications by enabling the commander of a manned force or a ship force to have a real time representation of the precise location of each of his men or ships. The second embodiment provides this capability without requiring ground-based transmission. Furthermore, because the present invention is not limited to any particular type of radiant energy, it may also be used to detect and report the occurrence and location of an anomalous condition such as leaks in long pipe lines, or for example, forest fires where small fires can be detected early before they have had a chance to do more substantial damage.

The present invention has been described in sufficient detail to enable one skilled in the art to make and use the invention. Accordingly, specific details which are readily available in the art or otherwise conventional such as the frequency of radio transmissions between ground stations and earth satellites and the like, have been omitted to prevent obfuscation of the essential features of the invention. By way of example, the peak signal detector referred to herein although not specifically described, may be any one of a large number of conventional AM demodulation and detection circuits including by way of example, the circuit of FIG. 7 of U.S. Patent No. 4,276,553 to which reference has been made previously. In view of the foregoing it will be understood that the present invention may be implemented in a variety of alternative ways using a variety of alternative processing methods, but that all such implementations and signal processing methods are deemed to be within the scope of the present invention which is to be limited only by the claims appended hereto.

I claim:

CLAIMS


1.  A locating system comprising:

a source of radiation the position of which in a scanned region is to be determined;

a relay device having means for scanning said region in a prescribed pattern, said pattern being the composite of a first circular path over said region and a plurality of second circular paths, said second circular paths being smaller than and spaced symmetrically along said first circular path, and means for determining the directions of respective straight lines between said source of radiation and one point on at least two of said second circular paths whereby the position of said source of radiation in said scanned region is determined by the intersection of said straight lines.


2.  The locating system recited in claim 1 wherein said relay device comprises means for relaying a manifestation of the radiation of said source of radiation to said determining means.

3. The locating system recited in claim 2 wherein said determining means comprises a peak radiation detector and means for ascertaining from detection of peak radiation from said source of radiation, the point on each of said scanning second circular paths at which such peak radiation detection occurs.

4. The locating system recited in claim 3 wherein said radiation is electromagnetic.

5. The locating system recited in claim 3 wherein said radiation is infrared.

6. The locating system recited in claim 3 wherein said source of radiation comprises a radio transmitter.

7. The locating system recited in claim 6 wherein said radio transmitter generates an encoded signal indicative of the identity of the transmitter.

8. The locating system recited in claim 3 wherein said relay device comprises a radiation receiver and a transmitter.

9. The locating system recited in claim 3 wherein said relay device comprises an earth orbiting satellite.

10. The locating system recited in claim 3 wherein said relay device comprises a geosynchronous orbit satellite.

11. The locating system recited in claim 3 wherein said determining means comprises a programmed computer and wherein said locating system further comprises at least one radiation source positioned within said scanned region at a location known precisely by said computer whereby to enable selective calibration of said locating system.

12. The locating system recited in claim 3 wherein said source of radiation comprises means for selective activation in response to a predetermined event.

13. The locating system recited in claim 12 wherein said source of radiation is located in a vehicle and said predetermined event is unauthorized access to said vehicle.

14. The locating system recited in claim 12 wherein said source of radiation is located on a person and said predetermined event is endangerment of such person.

15. The locating system recited in claim 3 further comprising means for communicating the determined position of said source of radiation.

16. The locating system recited in claim 9 wherein said relay device further comprises an additional satellite for downlink communication with said determining means.

17. A system for ascertaining the location of an energy-radiating source within a defined geometrical area on the surface of the earth; the system comprising:

an orbiting satellite positioned above said area, said satellite having means for detecting said radiation energy, means for scanning said area in a selected pattern, and means for re-radiating said radiant energy;

said selected pattern comprising a composite of a first arcuate path over said area and a plurality of second arcuate paths along said first arcuate path; and

an earth-based receiving apparatus having means for receiving said re-radiated radiant energy, means for ascertaining the direction of peak radiation from said source relative to a point on each such second arcuate path at which said scanning means is scanning respectively, when such peak radiation is detected by said detecting means, and means for calculating the intersection of said directions for locating said source.

18. The system recited in claim 17 wherein said scanning means comprises a narrow width antenna the main beam of which is directed toward said geometrical area and continuously moved in said selected pattern.

19. The system recited in claim 18 wherein said main beam is continuously moved by corresponding motion of said satellite.

20. The system recited in claim 19 wherein said motion of said satellite comprises approximately one revolution per minute in yaw to generate said first arcuate path and approximately twelve revolutions per minute in roll to generate said second arcuate paths.

21. The system recited in claim 18 wherein said main beam is continuously moved for scanning along said first arcuate path by corresponding motion of said satellite.

22. The system recited in claim 21 wherein said main beam is continuously moved for scanning along said second arcuate paths by mechanical roll motion of said antenna.

23. The system recited in claim 17 wherein said scanning means comprises an elongated longitudinal array of narrow beamwidth antennas forming an elongated, narrow scanning beam.

24. The system recited in claim 17 wherein said scanning means comprises an elongated longitudinal array of infrared detection devices.

25.   A system for determining the precise physical location of a receiver within a defined geometrical area on the surface of the earth; the system comprising:

an orbiting satellite positioned above said area, said satellite having means for scanning said area in a selected pattern while simultaneously transmitting a signal indicative of its instantaneous scan direction, said selected pattern comprising a composite of a first arcuate path over said area and a plurality of second arcuate paths along said first arcuate path, and

a receiver for receiving said signal and means for ascertaining the direction of peak signal strength and correlating said directions with said scan direction relative to a point on each such second arcuate path, respectively, for calculating the intersection of said directions for locating said receiver within said area.

1/6

0245714

NEAREST EMERGENCY RESPONSE TO STARFIND LOCATION 2

HELP ARRIVES

HELP ARRIVES

NEAREST EMERGENCY RESPONSE TO STARFIND LOCATION 1

FIG. 1

NEAREST EMERGENCY RESPONSE TO STARFIND LOCATION 2

HELP ARRIVES

HELP ARRIVES

NEAREST EMERGENCY RESPONSE TO STARFIND LOCATION 1

FIG. 2

FIG. 3

**10 GEOSYNCRONOUS EARTH ORBIT SATELLITE**

38 — RADIO RECEIVER → RADIO TRANSMITTER ← COMPASS — 43
40
36 — NARROW BEAM WIDTH ANTENNA | ANTENNA — 42

**EARTH STATIONS 12,14**

ACTIVATION DEVICES:
RADIO RECEIVER
PANIC BUTTON
MOTION DETECTOR
ACCELEROMETER
IR DETECTOR
NOISE DETECTOR
G SWITCH
MEDICAL DETECTOR
HEAT DETECTOR

ANTENNA — 34
RADIO TRANSMITTER — 32
ENCODER — 30

**EARTH BEACONS 24**

ANTENNA — 70
RADIO TRANSMITTER — 68
ENCODER — 66

**COMPUTER & COMMAND CENTER 16**

ANTENNA — 44
46 — DECODER
48 — RADIO RECEIVER → COMPUTER → AUTO DIALER — 56
50
54 — DISPLAY
52 — DATA BASE
LAND LINKS — 58
RADIO TRANSMITTER — 60
ANTENNA — 62
SATELLITE LINKS — 64

FIG. 4

FIG. 6

3/6

0245714

FIG. 5

```
        ┌──────────────────────┐
        │   UP-LINK SIGNAL     │
        │  FROM EARTH STATION  │
        └──────────┬───────────┘
                   │
    ┌──────────────┴──────────────────────────┐
    │  SATELLITE READ & REPEAT  TO STAR/       │
    │  CENTER (24 PER MIN.@ 12 RPM ROLL RATE)  │
    └──────────────┬──────────────────────────┘
                   │
          ┌────────┴─────────┐
          │  DOWN-LINK SIGNAL │
          │   TO STAR/CENTER  │
          └────────┬─────────┘
                   │
        ┌──────────┴────────────┐
        │  DECODE FOR IDENTIFICATION │
        │    OF STARFIND UNIT   │
        └──────────┬────────────┘
```

STARFIND EARTH STATION ────────────────────────► BEACON

INPUT STARFIND SIGNAL — COMPUTER

COMPUTER

COMPARE ACTUAL ROLL ANGLE WITH STORED ROLL ANGLE

COMPARE ACTUAL YAW ANGLE WITH STORED YAW ANGLE

COMPUTE STARFIND EARTH STATION TRIANGULATION LINE ◄──── UPDATE DATA BANK

DETERMINE LINE SEQUENCE

1st LINE — YES ──► OPEN FILE

NO

ADD TO FILE

CHECK FOR INTERCEPT COUNT > 24 — NO ──► WAIT FOR NEXT INPUT

YES

CALCULATE STARFIND EARTH STATION POSITION

DISPLAY POSITION & OTHER PERTINENT INFORMATION

PROVIDE APPROPRIATE RESPONSE

FIG. 7

UP-LINK SIGNAL
FROM EARTH STATION

SATELLITE READ & REPEAT TO STAR/
CENTER (24 PER MIN.@12 RPM ROLL RATE)

DOWN-LINK SIGNAL
TO STAR/CENTER ◄──── COMPASS
READING

DECODE FOR IDENTIFICATION
OF STARFIND UNIT

STARFIND EARTH STATION ──────► COMPASS

INPUT STARFIND
SIGNAL

COMPUTER

COMPARE ACTUAL
ROLL ANGLE
WITH STORED
ROLL ANGLE

COMPARE ACTUAL
YAW ANGLE
WITH STORED
YAW ANGLE

COMPUTE STARFIND
EARTH STATION
TRIANGULATION
LINE ◄──── UPDATE DATA
BANK

DETERMINE
LINE SEQUENCE

1st LINE ──YES──► OPEN FILE

NO

ADD TO FILE

CHECK FOR INTERCEPT
COUNT > 24 ──NO──► WAIT FOR NEXT
INPUT

YES

CALCULATE STARFIND
EARTH STATION
POSITION

DISPLAY POSITION
& OTHER PERTINENT
INFORMATION

PROVIDE APPROPRIATE
RESPONSE

FIG. 8